(19) Europäisches Patentamt
European Patent Office
Office européen des brevets

(11) Veröffentlichungsnummer: **0 382 048**
**A2**

(12) # EUROPÄISCHE PATENTANMELDUNG

(21) Anmeldenummer: **90101783.0**

(51) Int. Cl.5: **C08L 77/00, C08K 7/00**

(22) Anmeldetag: **30.01.90**

(30) Priorität: **04.02.89 DE 3903364**

(43) Veröffentlichungstag der Anmeldung:
**16.08.90 Patentblatt 90/33**

(84) Benannte Vertragsstaaten:
**BE CH DE ES FR GB IT LI NL**

(71) Anmelder: **BASF Aktiengesellschaft**
**Carl-Bosch-Strasse 38**
**D-6700 Ludwigshafen(DE)**

(72) Erfinder: **Gutsche, Herbert**
**Koenigsberger Strasse 4**
**D-6711 Beindersheim(DE)**
Erfinder: **Plachetta, Christoph, Dr.**
**Albert-Einstein-Allee 12**
**D-6703 Limburgerhof(DE)**
Erfinder: **Wolf, Uwe**
**Turnerstrasse 122**
**D-6900 Heidelberg(DE)**
Erfinder: **Goetz, Walter, Dr.**
**Dhauner Strasse 79**
**D-6700 Ludwigshafen(DE)**

(54) **Schlagzähe Polyamidformmassen.**

(57) Thermoplastische Formmassen aus

(A) 30 bis 96 Gew.% eines teilkristallinen Polyamids-6,6 oder eines teilkristallinen, teilaromatischen Copolyamids aus
$\alpha_1$) 40 bis 90 Gew.% eines äquimolaren Gemisches aus Terephthalsäure und Hexamethylendiamin,
$\alpha_2$) 0 bis 50 Gew.% $\epsilon$-Caprolactam,
$\alpha_3$) 0 bis 60 Gew.% eines äquimolaren Gemisches aus Adipinsäure und Hexamethylendiamin und
$\alpha_4$) 0 bis 15 Gew.% weiteren polyamidbildenden Monomeren,
wobei der Anteil der Komponenten $\alpha_2$) und/oder $\alpha_3$) mindestens 10 Gew.% beträgt und die Copolyamide einen Triamingehalt von weniger als 0,5 Gew.% aufweisen,

(B) 2 bis 50 Gew.% eines von (A) verschiedenen teilkristallinen Polyamids,

(C) 2 bis 25 Gew.% eines nichtionomeren kautschukelastischen Polymerisats und

(D) 0 bis 50 Gew.% faser- oder teilchenförmiger Füllstoffe oder Mischungen dieser Füllstoffe.

EP 0 382 048 A2

## Schlagzähe Polyamidformmassen

Die Erfindung betrifft thermoplastische Formmassen aus

(A) 30 bis 96 Gew.% eines teilkristallinen Polyamids-6,6 oder eines teilkristallinen, teilaromatischen Copolyamids aus

$\alpha_1$) 40 bis 90 Gew.% eines äquimolaren Gemisches aus Terephthalsäure und Hexamethylendiamin,

$\alpha_2$) 0 bis 50 Gew.% $\epsilon$-Caprolactam und

$\alpha_3$) 0 bis 60 Gew.% eines äquimolaren Gemisches aus Adipinsäure und Hexamethylendiamin,

$\alpha_4$) 0 bis 15 Gew.% weiteren polyamidbildenden Monomeren,

wobei der Anteil der Komponenten $\alpha_2$) und/oder $\alpha_3$) mindestens 10 Gew.% beträgt, und die Copolyamide einen Triamingehalt von weniger als 0,5 Gew.% aufweisen,

(B) 2 bis 50 Gew.% eines von (A) verschiedenen teilkristallinen Polyamids,

(C) 2 bis 25 Gew.% eines nichtionomeren kautschukelastischen Polymerisats und

(D) 0 bis 50 Gew.% faser- oder teilchenförmiger Füllstoffe oder Mischungen dieser Füllstoffe.

Darüber hinaus betrifft die Erfindung die Verwendung dieser Formmassen zur Herstellung von Fasern, Folien und Formkörpern sowie die aus den erfindungsgemäßen Formmassen erhältlichen Formkörper.

Aus der EP-A 34 704 ist bekannt, daß Formkörper aus Mischungen von Poly-$\epsilon$-caprolactam und Polyhexamethylenadipinsäureamid in Verbindung mit Kautschuken, die größere Mengen ionogene Monomere enthalten, verbesserte Schlagzähigkeiten gegenüber Abmischungen aufweisen, die nur eines der Polyamide enthalten.

Die Steifigkeit und Festigkeit derartiger Formkörper sind jedoch nicht im vollen Umfange zufriedenstellend, da die ionogenen Monomeren größere Kautschukteilchen und somit eine schlechtere Wechselwirkung mit den Polyamiden ergeben. Zudem läßt die Wärmeformbeständigkeit dieser Formmassen zu wünschen übrig.

Aus der EP-A 124 452 sind schlagzäh modifizierte Polyamidmischungen bekannt, in denen das kautschukelastische Polymerisat als Masterbatch in Polyamid-6 in die Mischung eingearbeitet wird. Dieses Verfahren ist jedoch von Nachteil, weil das Polyamid hierbei zweimal thermisch belastet wird, wodurch sich die mechanischen Eigenschaften der Formkörper verschlechtern.

Weiterhin ist aus der US-PS 4 174 358 bekannt, daß die Schlagzähigkeit von Polyamiden durch Zusatz von statistischen Copolyamiden verbessert werden kann. Die Formkörper zeigen jedoch bei tiefen Temperaturen nicht zufriedenstellende Schlagzähigkeiten auf.

Zusätzlich werden in der älteren deutschen Patentanmeldung P 38 04 161.8 Polyamidformmassen mit verschiedenen schlagzäh modifizierenden Kautschukarten vorgeschlagen.

Der vorliegenden Erfindung lag daher die Aufgabe zugrunde, schlagzäh modifizierte Polyamidformmassen zur Verfügung zu stellen, aus denen sich Formkörper mit verbesserter Steifigkeit bei gleichzeitig guter Schlagzähigkeit herstellen lassen. Außerdem sollen sich die Formkörper unmittelbar nach ihrer Herstellung leicht und ohne kleben zu bleiben aus ihrer Form entfernen lassen.

Demgemäß wurden die eingangs definierten schlagzähen Polyamidformmassen gefunden.

Bevorzugte Formmassen dieser Art und ihre Verwendung sind den Unteransprüchen zu entnehmen.

Als Komponente (A) enthalten die erfindungsgemäßen Formmassen 30 bis 96, vorzugsweise 40 bis 90 und insbesondere 45 bis 85 Gew.% Polyamid-6,6 oder eines teilkristallinen, teilaromatischen Copolyamids.

Die aromatischen Copolyamide enthalten als Komponente $\alpha_1$) 40 bis 90 Gew.% eines äquimolaren Gemisches von Terephthalsäure und Hexamethylendiamin. Ein geringer Anteil der Terephthalsäure, vorzugsweise nicht mehr als 5 Gew.% der gesamt eingesetzten aromatischen Dicarbonsäuren können durch Isophthalsäure oder andere aromatische Dicarbonsäuren, vorzugsweise solche, in denen die Carboxylgruppen in para-Stellung stehen, ersetzt werden.

Neben den Einheiten, die sich von Terephthalsäure und Hexamethylendiamin ableiten, enthalten die Copolyamide Einheiten, die sich von $\epsilon$-Caprolactam ableiten und/oder Einheiten, die sich von Adipinsäure und Hexamethylendiamin ableiten.

Der Anteil an Einheiten, die sich von $\epsilon$-Caprolactam (Komponente $\alpha_2$)) ableiten, beträgt bis zu 50 Gew.%, vorzugsweise 20 bis 45 Gew.%, insbesondere 25 bis 40 Gew.%, während der Anteil an Einheiten, die sich von Adipinsäure und Hexamethylendiamin (Komponente $\alpha_3$)) ableiten, bis zu 60 Gew.%, vorzugsweise 30 bis 55 Gew.% und insbesondere 35 bis 50 Gew.% beträgt.

Die Copolyamide können auch sowohl Einheiten von $\epsilon$-Caprolactam als auch Einheiten von Adipinsäure und Hexamethylendiamin enthalten; in diesem Fall ist darauf zu achten, daß der Anteil an Einheiten, die frei von aromatischen Gruppen sind, mindestens 10 Gew.% beträgt, vorzugsweise mindestens 20 Gew%. Das Verhältnis der Einheiten, die sich von $\epsilon$-Caprolactam und von Adipinsäure und Hexamethylendiamin

ableiten, unterliegt hingegen keiner besonderen Beschränkung.

Als besonders vorteilhaft haben sich Copolyamide aus 50 bis 80, insbesondere 60 bis 75 Gew.% aus der Komponente $\alpha_1$), und 20 bis 50, vorzugsweise 25 bis 40 Gew.% der Komponente $\alpha_2$), erwiesen.

Neben den vorstehend beschriebenen Komponenten $\alpha_1$) bis $\alpha_3$) können die teilaromatischen Copolyamide noch untergeordnete Mengen, vorzugsweise nicht mehr als 15 Gew.%, insbesondere nicht mehr als 10 Gew.%, an weiteren Polyamidbausteinen (Komponente $\alpha_4$)) enthalten, wie sie von anderen Polyamiden bekannt sind. Diese Bausteine können sich von Dicarbonsäure mit 4 bis 16 Kohlenstoffatomen und aliphatischen oder cycloaliphatischen Diaminen mit 4 bis 16 Kohlenstoffatomen sowie von Aminocarbonsäuren bzw. entsprechenden Lactamen mit 7 bis 12 Kohlenstoffatomen ableiten. Als geeignete Monomere dieser Typen seien Suberinsäure, Azelainsäure, Sebacinsäure oder Isophthalsäure als Dicarbonsäuren und 1,4-Diaminobutan, 1,5-Diaminopentan, Piperazin, 4,4′-Diaminodicyclohexylmethan, 2,2-((4,4′-Diaminodicyclohexyl)propan und 3,3′-Dimethylen-4,4′-diaminodicyclohexylmethan als Diamine und Capryllactam, Önanthlactam, ω-Aminoundecansäure und Laurinlactam als Lactame bzw. Aminocarbonsäuren genannt. Die teilaromatischen Copolyamide sollen einen Triamingehalt (Gehalt an Kondensationsprodukten der Diamine des Typs $H_2N$-R-NH-R-$NH_2$) von weniger als 0,5, vorzugsweise weniger als 0,3 Gew.% aufweisen. Diese Bedingung läßt sich in an sich bekannter Weise durch Polykondensation unter schonenden Bedingungen, unter denen eine Selbstkondensation der Diamine praktisch unterbunden wird, einhalten.

Die Herstellung der Polyamide (A) kann nach dem in den EP-A 129 195 und 129 196 beschriebenen Verfahren erfolgen.

Die Schmelzpunkte der teilaromatischen Copolyamide liegen im Bereich von 260°C bis über 300°C, wobei dieser hohe Schmelzpunkt auch mit einer hohen Glasübergangstemperatur von in der Regel mehr als 75, insbesondere mehr als 85°C verbunden ist.

Die Herstellung und Eigenschaften von Polyamid-6,6 sind allgemein bekannt, so daß sich weitere Einzelheiten hierzu erübrigen.

Die relative Viskosität der Polyamide (Komponente (A)), gemessen in 1 gew.%iger Lösung in 96 gew.%iger Schwefelsäure bei 25°C, liegt im allgemeinen im Bereich von 2,2 bis 5,0, und zwar meistens, wie es erwünscht ist, im Bereich von 2,3 bis 4,5; entsprechend einer Viskositätszahl von 106 bis 312, bzw. von 114 bis 282 ml/g.

Die Viskositätszahl ist ein Maß für das Molekulargewicht des Polyamids und wird im allgemeinen nach DIN 53 727 mit einem Ubbelohde-Viskosimeter an 0,5 %igen Lösungen des Polyamids in 96 gew.%iger Schwefelsäure bei 25°C bestimmt. Diese Viskositätszahlen entsprechen einer relativen Viskosität $\eta_{rel}$ der Polyamide von 2,2 bis 5,0, vorzugsweise von 2,3 bis 4,5, bestimmt in einer 1 vol.%igen Lösung von 96 gew.%iger Schwefelsäure bei 25°C, was einem Molekulargewicht (Zahlenmittelwert) von etwa 13.000-30.000 entspricht.

Als Komponente (B) enthalten die erfindungsgemäßen Formmassen 2 bis 50, vorzugsweise 2 bis 25 Gew.% eines von (A) verschiedenen teilkristallinen Polyamids.

Bevorzugt sind Polyamide mit einer Viskositätszahl von 106 bis 312, besonders bevorzugt von 114 bis 282 ml/g.

Halbkristalline Polyamide mit einem Molekulargewicht (Gewichtsmittelwert) von mindestens 5000, wie sie z.B. in den amerikanischen Patentschriften 2 071 250, 2 071 251, 2 130 523, 2 130 948, 2 241 322, 2 312 966, 2 512 606 und 3 393 210 beschrieben werden, sind bevorzugt.

Beispiele hierfür sind Polyamide die sich von Lactamen mit 7 bis 13 Ringgliedern ableiten, wie Polycaprolactam, Polycapryllactam und Polylaurinlactam, sowie Polyamide, die durch Umsetzung von Dicarbonsäuren mit Diaminen erhalten werden.

Als Dicarbonsäuren sind Alkandicarbonsäuren mit 6 bis 12, insbesondere 6 bis 10 Kohlenstoffatomen und aromatische Dicarbonsäuren einsetzbar, vor allem unverzweigte α,ω-Dicarbonsäuren wie Adipinsäure, Azelainsäure, Sebacinsäure, Dodecandisäure sowie aromatische Dicarbonsäuren wie Terephthal- und/oder Isophthalsäure.

Als Diamine eignen sich besonders unverzweigte α,ω-Alkandiamine mit 6 bis 12, insbesondere 6 bis 8 Kohlenstoffatomen.

Bevorzugte Polyamide sind Polyhexamethylensebacinsäureamid und Polycaprolactam. Weiterhin sind Polyamide, die durch Copolymerisation zweier oder mehrerer der vorgenannten Monomeren erhältlich sind, oder Mischungen mehrerer Polyamide geeignet.

Außerdem seien noch Polyamide erwähnt, die durch Kondensation von 1,4-Diaminobutan mit Adipinsäure bei erhöhter Temperatur erhältlich sind (Polyamid-4,6). Herstellungsverfahren für Polyamide dieser Struktur sind z.B. in den EP-A 38 094, 38 582 und 39 524 beschrieben.

Bevorzugte erfindungsgemäße Kombinationen der Polyamide (A) und (B) sind: 40 bis 80 Gew.% Polyamid-6,6 und 2 bis 20 Gew.% Polyamid-6.

Als weitere Komponente (C) enthalten die erfindungsgemäßen Formmassen 2 bis 25, vorzugsweise 3 bis 20 und insbesondere 5 bis 15 Gew.%, bezogen auf das Gesamtgewicht der Komponenten (A) bis (D) eines nichtionomeren kautschukelastischen Polymerisats, welches 0,1 bis 10 Gew.% an Gruppen enthält, die sich von säurefunktionellen und/oder latent säurefunktionellen Monomeren ableiten.

Prinzipiell sind als Komponente (C) alle Kautschuke geeignet, die in Abmischung mit den Polyamiden (A) und (B) eine Verbesserung der Schlagzähigkeit mit sich bringen und mit den latent säurefunktionellen oder säurefunktionellen Monomeren gepfropft oder copolymerisiert werden können.

Als säurefunktionelle oder latent säurefunktionelle Monomere ($\gamma_3$) seien Acrylsäure, Methacrylsäure, tertiäre Alkylester dieser Säuren, insbesondere tert.-Butylacrylat und Dicarbonsäuren wie z.B. Maleinsäure und Fumarsäure bzw. Derivate dieser Säuren sowie deren Monoester genannt.

Als latent säurefunktionelle Monomere im Sinne der vorliegenden Erfindung sollen solche Verbindungen verstanden werden, die unter den Polymerisationsbedingungen bzw. bei der Einarbeitung der Kautschuke (C) in die Formmassen freie Säuregruppen bilden. Als Beispiele hierfür seien Anhydride von Dicarbonsäuren mit bis zu 20 C-Atomen, insbesondere Maleinsäureanhydrid und $C_1$-$C_{12}$-Alkylester der vorstehend genannten Säuren, insbesondere das tert.-Butylacrylat, tert.-Butylmethacrylat und das n-Butylacrylat angeführt.

Im allgemeinen handelt es sich bei den mit säurefunktionellen oder latent säurefunktionellen copolymerisierten oder gepfropften Kautschuken um Copolymerisate, die bevorzugt aus mindestens 2 der folgenden Monomeren als Hauptkomponenten aufgebaut sind: Ethylen, Propylen, Butadien, Isobuten, Chloropren, Vinylacetat, Styrol, Acrylnitril und Acryl- und Methacrylsäureestern mit 1 bis 18 C-Atomen in der Alkoholkomponente ($\gamma_1$ und $\gamma_2$).

Im folgenden werden einige bevorzugte Arten solcher Elastomeren (C) vorgestellt.

Als erste bevorzugte Gruppe sind die sogenannten Ethylen-Propylen-(EPM) Kautschuke zu nennen, deren Ethylenanteil vorzugsweise 40 bis 90 mol% beträgt.

Die Mooneyviskositäten (MLI+4/100 °C) solcher unvernetzten EPM-Kautschuke liegen bevorzugt im Bereich von 25 bis 100, insbesondere von 35 bis 90 (gemessen am großen Rotor nach 4 Minuten Laufzeit bei 100 °C nach DIN 53 523).

EPM-Kautschuke haben im allgemeinen praktisch keine Doppelbindungen mehr, der Gelgehalt beträgt meist weniger als 1 Gew.%.

EPM-Kautschuke werden vorzugsweise mit säurefunktionellen oder latent säurefunktionellen Monomeren gepfropft, hier z.B. mit Acrylsäure, Methacrylsäure und deren Derivaten sowie besonders mit Maleinsäureanhydrid.

Eine weitere Gruppe bevorzugter Kautschuke sind Copolymere des Ethylens ($\gamma_1$) mit Acrylsäure und/oder Methacrylsäure ($\gamma_3$) und/oder den Estern dieser Säuren ($\gamma_2$). Zusätzlich können die Kautschuke noch Dicarbonsäuren, z.B. Maleinsäure und Fumarsäure oder Derivate dieser Säuren, wie Ester und Anhydride ($\gamma_3$) und/oder Epoxy-Gruppen enthaltende Monomere enthalten ($\gamma_4$). Bevorzugte Monomere dieser Art entsprechen den folgenden allgemeinen Formeln I bis IV,

$$R_1C(COOR_2)=C(COOR_3)R_4 \qquad (I)$$

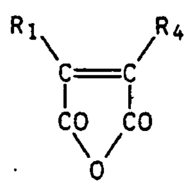

(II)

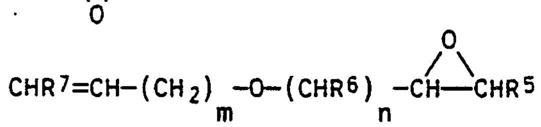

(III)

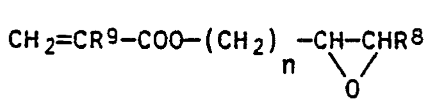

(IV)

in denen die Reste $R^1$ - $R^9$ Wasserstoff oder Alkylgruppen mit 1 bis 6 C-Atomen darstellen und m 0 bis 20, n 0 bis 10 und p 0 bis 5 bedeutet.

Bevorzugt für $R^1$ - $R^7$ ist Wasserstoff, für m 0 oder 1 und für n 1. Die entsprechenden Verbindungen

sind Maleinsäure, Fumarsäure, Maleinsäureanhydrid ($\gamma_3$), Alkylglycidylether ($\gamma_4$) oder Vinylglycidylether ($\gamma_4$).

Bevorzugte Verbindungen der Formeln I, II und III sind Maleinsäure, Maleinsäureanhydrid ($\gamma_3$) und Epoxygruppen-enthaltende Ester der Acrylsäure und/oder Methacrylsäure, wobei Glycidylacrylat und Glycidylmethacrylat besonders bevorzugt werden ($\gamma_4$).

Der Ethylengehalt der Copolymeren liegt im allgemeinen im Bereich von 50 bis 98 Gew.%, der Anteil an säurefunktionellen oder latent säurefunktionellen Monomeren und der Anteil der Acrylsäure- und/oder Methacrylsäureester bzw. der Epoxygruppen enthaltenden Monomeren jeweils im Bereich von 1 bis 49 Gew.%.

Besonders bevorzugt sind Copolymerisate aus
50 bis 98,5, insbesondere 60 bis 95 Gew.% Ethylen,
0,49 bis 30, insbesondere 1 bis 20 Gew.% Acrylsäure,
0,01 bis 10, insbesondere 0,1 bis 2 Gew.% Maleinsäureanhydrid,
1 bis 45, insbesondere 10 bis 35 Gew.% n-Butylacrylat und/oder 2-Ethylhexylacrylat und/oder Glycidylacrylat und/oder Glycidylmethacrylat sowie daneben die Methyl-, Ethyl-, Propyl- und i-Butylester der Acryl- und Methacrylsäure.

Daneben können auch Vinylester und Vinylether als Comonomere eingesetzt werden.

Die Herstellung dieser Ethylencopolymeren kann nach an sich bekannten Verfahren erfolgen, vorzugsweise durch statistische Copolymerisation unter hohem Druck und erhöhter Temperatur. Entsprechende Verfahren sind in der Literatur beschrieben.

Der Schmelzindex der Ethylencopolymeren liegt im allgemeinen im Bereich von 1 bis 80 g/10 min (gemessen bei 190 °C und 2,16 kg Belastung).

Bevorzugte Elastomere (Kautschuke (C)) sind weiterhin Pfropfcopolymerisate mit Butadien, Butadien/Styrol-, Butadien/Acrylnitril und Acrylestern als Pfropfgrundlage, wie sie z.B. in den DE-A-16 94 173 und DE-A-23 48 377 beschrieben werden.

Von diesen sind insbesondere die sogenannten ABS-Polymerisate zu nennen, wie sie in den DE-A-20 35 390, DE-A-22 48 242 und der EP-A-22 216 beschrieben werden, wobei letztere besonders bevorzugt sind.

Als Kautschuk (C) können auch Pfropfpolymerisate aus
25 bis 98 Gew.% eines Acrylatkautschuks mit einer Glasübergangstemperatur von unter -20 °C als Pfropfgrundlage (Basispolymeres)
und
2 bis 75 Gew.% eines copolymerisierbaren ethylenisch ungesättigten Monomeren, dessen Homo- bzw. Copolymerisate eine übergangstemperatur von mehr als 25 °C aufweisen, als Pfropfauflage (Pfropfhülle) eingesetzt werden.

Die Basispolymeren sind Acrylat bzw. Methacrylatkautschuke, wobei bis zu 40 Gew.% weitere Comonomere enthalten sein können. Die $C_1$-$C_8$-Ester der Acrylsäure bzw. Methacrylsäure sowie deren halogenierte Derivate wie auch aromatische Acrylsäureester und deren Mischungen werden bevorzugt. Als Comonomere seien Acrylnitril, Methacrylnitril, Styrol, α-Methylstyrol, Acrylamide, Methacrylamide sowie Vinyl-$C_1$-$C_6$-Alkylether angeführt.

Das Basispolymere kann unvernetzt oder teilweise oder vollständig vernetzt sein. Die Vernetzung wird z.B. durch Copolymerisation von vorzugsweise 0,02 bis 5 Gew.%, insbesondere 0,05 bis 2 Gew.% eines vernetzenden Monomeren mit mehr als einer Doppelbindung erzielt. Geeignete vernetzende Monomere werden z.B. in der DE-A-27 26 256 und der EP-A-50 265 beschrieben, wobei Triallylcyanurat, Triallylisocyanurat, Triacryloylhexahydro-s-triazin und Triallylbenzole bevorzugt werden.

Falls die vernetzenden Monomeren mehr als 2 polymerisierbare Doppelbindungen aufweisen, ist es vorteilhaft ihre Menge auf nicht mehr als 1 Gew.%, bezogen auf das Basispolymere, zu beschränken.

Besonders bevorzugte Basispolymere sind Emulsionspolymerisate mit einem Gelgehalt von mehr als 60 Gew.% (bestimmt in Dimethylformamid bei 25 °C nach M. Hoffmann, H. Krömer, R. Kuhn, Polymeranalytik, Georg-Thieme-Verlag, Stuttgart, 1977).

Ebenfalls geeignet als Basispolymere sind Acrylat-Kautschuke mit einem Dienkern, wie sie z.B. in der EP-A-50 262 beschrieben werden.

Als Pfropfmonomere eignen sich besonders Styrol, α-Methylstyrol, Acrylnitril, Methacrylnitril und Methylmethacrylat oder deren Mischungen, insbesondere solche aus Styrol und Acrylnitril im Gewichtsverhältnis von 1:1 bis 9:1.

Die Pfropfausbeute, d.h. der Quotient aus der Menge des aufgepfropften Monomeren und der Menge des eingesetzten Pfropfmonomeren liegt im allgemeinen im Bereich von 20 bis 80 %.

Kautschuke auf der Basis von Acrylaten, die erfindungsgemäß verwendet werden können, werden z.B.

in der DE-A-24 44 584 und der DE-A-27 26 256 beschrieben.

Die Kautschuke (C) weisen in der Regel, wie es erwünscht ist, eine Glasübergangstemperatur von unter -30 °C, insbesondere von unter -40 °C auf.

Die Gruppen, die sich von säurefunktionellen oder latent säurefunktionellen Monomeren ableiten, werden in die vorstehend beschriebenen Pfropfcopolymerisate vorzugsweise durch Mitverwendung der entsprechenden Monomeren bei der Pfropfung eingeführt. Entsprechend dem Anteil an solchen Gruppen beträgt der Anteil dieser Monomeren in der Pfropfmonomerenmischung 0,5 bis 50, vorzugsweise 1 bis 20 und insbesondere 1 bis 10 Gew.%.

Selbstverständlich kann man auch Mischungen der vorstehend aufgeführten Kautschuktypen einsetzen.

Besonders bevorzugte Formmassen enthalten neben dem säuremodifizierten Kautschuk (vorstehend als Komponente ($\gamma_1$-$\gamma_4$) beschrieben) einen nicht säuremodifizierten thermoplastischen Kautschuks, der mit dem Kautschuk ($\gamma_1$-$\gamma_4$) nicht homogen mischbar ist (Komponente ($\gamma_5$)).

Als nicht säuremodifizierte thermoplastische Kautschuke eignen sich prinzipiell alle an sich bekannten und in der Literatur beschriebenen thermoplastischen Kautschuke.

Thermoplastische Kautschuke sind bekanntlich Polymere, welche sich bei Gebrauchstemperatur gummielastisch verhalten, sich jedoch bei höherer Temperatur wie thermoplastische Polymere verarbeiten lassen.

Die Vernetzung, die für die gummielastischen Eigenschaften verantwortlich ist, ist thermoreversibel, also physikalischer Natur.

Thermoplastische Kautschuke sind im allgemeinen aus miteinander unverträglichen elastischen und thermoplastischen Phasen alternierend aufgebaut.

Eine gute Übersicht über thermoplastische Elastomere findet sich z.B. in der Monographie von B.M. Waker "Handbook of Thermoplastic Elastomeres", Van Nostrand Reinhold, New York, 1979 oder z.B. in Encyclopedia of Polymer Science and Engineering, Vol. 5, Seiten 416 bis 430.

Thermoplastische Elastomere sind in der Regel Mehrphasenzusammensetzungen, in denen die Phasen sehr fein ineinander verteilt sind. In vielen Fällen sind die Phasen chemisch durch Block- oder Pfropfcopolymerisation aneinander gebunden. In einigen Fällen reicht aber auch eine sehr feine Verteilung für die Erzielung der thermoplastischen Eigenschaften aus.

Wenigstens eine Phase ist auf einem Material aufgebaut, das bei Raumtemperatur steif ist, aber beim Erhitzen flüssig wird.

Eine andere Phase besteht aus einem weicheren Material, das bei Raumtemperatur oder der üblichen Gebrauchstemperatur gummielastische Eigenschaften zeigt.

Ein einfaches Beispiel einer solchen Struktur ist ein A-B-A-Blockcopolymer, wobei A eine Hartphase und B ein Elastomer ist, z.B. Poly(Styrol-b-Elastomer-b-Styrol).

Der Elastomerblock in diesen größtenteils handelsüblichen Produkten besteht in der Regel aus Butadien, Isopren oder Ethylen-Butadien-Copolymeren.

Verfahren zur Herstellung derartiger Blockcopolymere sind z.B. in Encyclopedia of Polymer Science and Engineering, Vol. 5, Seiten 416 bis 430 beschrieben.

Eine weitere Gruppe von thermoplastischen Elastomeren sind die thermoplastischen Polyurethane, wie sie ebenfalls in einer Vielzahl von Veröffentlichungen beschrieben sind.

Auch Polyether/Polyester-Copolymere, insbesondere die im Handel erhältlichen Copolyetherester mit kurzkettigen Estersegmenten und langkettigen Ethersegmenten eignen sich als thermoplastische Kautschuke.

Weiterhin sind Blends (Mischungen) aus Polyolefinen und EP- bzw. EPDM-Kautschuken zu nennen, wie sie ebenfalls im Handel erhältlich sind.

Schließlich seien als letzte Gruppe von thermoplastischen Elastomeren, die als Kautschuke ($\gamma_5$) geeignet sind, Copolymere von Ethylen und Acrylsäure- oder deren Estern, besonders bevorzugt Ethylen-n-Butylacrylat-Copolymerisate mit einem Ethylengehalt von 50 bis 98 und entsprechend einem n-Butylacrylat- oder Acrylsäuregehalt von 2 bis 50 Gew.% genannt.

Es versteht sich, daß natürlich auch mehrere Kautschuke aus den Komponenten ($\gamma_1$) bis ($\gamma_4$) bzw. mehrere Kautschuke ($\gamma_5$) in Mischung miteinander eingesetzt werden können, so lange mindestens ein Kautschuk aus jeder der beiden Gruppen vorhanden ist.

Besonders geeignete Kautschukkombinationen sind für die erfindungsgemäßen Formmassen säuremodifizierte Ethylencopolymerisate ($\gamma_1$-$\gamma_4$) und Ethylen-Acrylsäure-Copolymerisate.

Die Mengen der Kautschukmischungen betragen im allgemeinen von 0 bis 25 Gew.% ($\gamma_1$) bis ($\gamma_4$) und von 0 bis 10 Gew.% ($\gamma_5$) und besonders bevorzugt von 2 bis 15 Gew.% ($\gamma_1$ bis $\gamma_4$) und von 1 bis 7 Gew.% ($\gamma_5$) bezogen auf das Gesamtgewicht der Komponenten (A) bis (C).

Als weiteren Bestandteil können die erfindungsgemäßen Formmassen 0 bis 50, vorzugsweise 5 bis 40

und insbesondere 10 bis 35 Gew.% eines faser- oder teilchenförmigen Füllstoffes (Komponente (D)) oder deren Mischungen enthalten.

Bevorzugte faserförmige Verstärkungsstoffe (Komponente (D)) sind Kohlenstoffasern, Kaliumtitanatwhisker, Aramidfasern und besonders bevorzugt Glasfasern, wobei die Glasfasern sowohl alkalimetallhaltig als auch frei von Alkalimetallen sein können. Bei der Verwendung von Glasfasern können diese zur besseren Verträglichkeit mit dem thermoplastischen Polyamiden (A) und (B) mit einer Schlichte, z.B. Polyurethan und einem Haftvermittler, z.B. Aminotrialkoxysilane ausgerüstet sein. Im allgemeinen haben die verwendeten Glasfasern einen Durchmesser im Bereich von 6 bis 20 µm.

Die Einarbeitung dieser Glasfasern kann sowohl in Form von Kurzglasfasern als auch in Form von Endlossträngen (Rovings) erfolgen. Im fertigen Spritzgußteil liegt die mittlere Länge der Glasfasern vorzugsweise im Bereich von 0,08 bis 0,5 mm.

Als teilchenförmige Füllstoffe eignen sich amorphe Kieselsäure, Asbest, Magnesiumcarbonat (Kreide), Kaolin (insbesondere kalzinierter Kaolin), gepulverter Quarz, Glimmer, Talkum, Feldspat und insbesondere Kalziumsilikate wie Wollastonit.

Bevorzugte Kombinationen von Füllstoffen sind z.B. 10 Gew.% Glasfasern mit 20 Gew.% Wollastonit oder Kaolin und 15 Gew.% Glasfasern mit 25 Gew.% Wollastonit oder Kaolin.

Neben den Komponenten (A) bis (D) können die erfindungsgemäßen Formmassen übliche Zusatzstoffe und Verarbeitungshilfsmittel enthalten.

Deren Anteil beträgt im allgemeinen bis zu 20, vorzugsweise bis zu 10 Gew.%, bezogen auf das Gesamtgewicht der Komponenten (A) bis (D).

Übliche Zusatzstoffe sind beispielsweise Stabilisatoren und Oxidationsverzögerer, Mittel gegen Wärmezersetzung und Zersetzung durch ultraviolettes Licht, Gleit- und Entformungsmittel, Färbemittel wie Farbstoffe und Pigmente sowie Weichmacher.

Oxidationsverzögerer und Wärmestabilisatoren, die den thermoplastischen Massen gemäß der Erfindung zugesetzt werden können, sind z.B. Halogenide von Metallen der Gruppe I des Periodensystems, z.B. Natrium-, Kalium-, und Lithiumhalogenide, gegebenenfalls in Verbindung mit Kupfer-(I)-halogeniden, z.B. Kupferchloriden, -bromiden oder -iodiden. Ferner sind sterisch gehinderte Phenole, Hydrochinone, substituierte Vertreter dieser Gruppe und deren Mischungen, vorzugsweise in Konzentrationen bis zu 1 Gew.%, bezogen auf das Gewicht der Komponenten (A) bis (D), einsetzbar.

Beispiele für UV-Stabilisatoren sind verschiedene substituierte Resorcine, Salicylate, Benzotriazole und Benzophenone, deren Anteil im allgemeinen nicht mehr als 2 Gew.%, bezogen auf das Gewicht der Komponenten (A) bis (D) beträgt.

Gleit- und Entformungsmittel, die in der Regel in Mengen bis zu 1 Gew.% den thermoplastischen Formmassen zugesetzt werden, sind Stearinsäure, Stearylalkohol, Stearinsäurealkylester und Stearinsäureamide sowie Ester des Pentaerythrits mit langkettigen Fettsäuren.

Ferner können organische Farbstoffe wie Nigrosine und Pigmente, z.B. Titandioxid, Cadmiumsulfid, Cadmiumsulfidselenit, Phthalocyanine, Zinksulfid, Ultramarinblau oder Ruß zugesetzt werden.

Die erfindungsgemäßen Formmassen können weiterhin Flammschutzmittel in einer Konzentration bis zu 40 Gew.% bevorzugt von bis zu 25 Gew.%, bezogen auf das Gesamtgewicht der Komponenten (A) bis (D), enthalten.

Es kommen alle bekannten Flammschutzmittel in Betracht, z.B. Polyhalogendiphenyl, Polyhalogendiphenylether, Polyhalogenphthalsäure und ihre Derivate, Polyhalogenoligo- und -polycarbonate, wobei die Bromverbindungen besonders wirksam sind.

Bevorzugte Flammschutzmittel sind elementarer Phosphor, vor allem im Falle glasfaserverstärkter Formmassen, organische Phosphorverbindungen wie die Ester der Phosphorsäure, der phosphorigen Säure und von Phosphon- und Phosphinsäuren sowie tertiäre Phosphine und Phosphinoxide. Als Beispiel sei Triphenylphosphinoxid genannt. Dieses kann allein oder zusammen mit Hexabrombenzol oder einem chlorierten Biphenyl und, wahlweise, Antimonoxid verwendet werden.

Als Flamschutzmittel sind auch solche Verbindungen geeignet, die Phosphor-Stickstoff-Bindungen enthalten, wie Phosphornitrilchlorid, Phosphorsäureesteramide, Phosphorsäureamide, Phosphonsäureamide, Phosphinsäureamide, Tris-(aziridinyl)-phosphinoxid oder Tetrakis-(hydroxymethyl)-phosphoniumchlorid.

Weitere halogenhaltige Flammschutzmittel sind Tetrabrombenzol, Hexachlorbenzol und Hexabrombenzol sowie halogenierte Polystyrole oder Polyphenylenether.

Auch die in der DE-A-19 46 924 beschriebenen halogenierten Phthalimide können verwendet werden. Von diesen hat insbesondere N,N′-Ethylen-bis-tetrabromphthalimid Bedeutung erlangt.

Die erfindungsgemäßen thermoplastischen Formmassen können nach an sich bekannten Verfahren hergestellt werden, indem man die Ausgangskomponenten in üblichen Mischvorrichtungen wie Schneckenextrudern, Brabender-Mühlen oder Banbury-Mühlen mischt und anschließend extrudiert. Nach der Extrusion

wird das Extrudat abgekühlt und zerkleinert. Die Mischtemperaturen liegen im allgemeinen im Bereich von 220 bis 360 °C, in Abhängigkeit von der Art der enthaltenen Polyamiden (A) und (B).

Die erfindungsgemäßen Massen können auch durch einen Pultrusionsvorgang hergestellt werden, wie er in EP-A 56 703 beschrieben wird. Dabei wird der Glasfaserstrang mit Polymermasse durchtränkt und anschließend abgekühlt und zerkleinert. Die Glasfaserlänge ist in diesem Fall identisch mit der Granulatlänge und liegt zwischen 3 und 20 mm.

Die erfindungsgemäßen Formmassen zeichnen sich durch eine hohe Steifigkeit und Festigkeit bei gleichzeitig guter Zähigkeit aus. Sie weisen ein sehr gutes Rekristallisationsverhalten auf, wodurch die Zykluszeit beim Spritzgußverfahren zur Herstellung der Formkörper erheblich reduziert wird.

Die Formkörper zeigen eine hohe Wärmeformbeständigkeit und verringerte Klebeneigung bei ihrer Herstellung. Sie eignen sich daher besonders für großflächige Formteile wie Radblenden und Kraftfahrzeugaußenteile.

## Beispiele

### Ausgangskomponenten

#### Komponente (A)

Polyhexamethylenadipinsäureamid mit einer relativen Viskosität von 2,6 entsprechend einer Viskositätszahl von 143 ml/g (gemessen nach DIN 53 727 an 0,5 %igen Lösungen in 96 gew.%iger Schwefelsäure bei 25 °C).

#### Komponente (A′) (zum Vergleich gemäß US-4 174 358)

Ein statistisches Copolyamid mit 10 % wiederkehrenden Einheiten, die sich von Caprolactam ableiten, und 90 % wiederkehrenden Einheiten, die sich von Hexamethylenadipinsäureamid ableiten.

#### Komponente (B)

Poly-ε-caprolactam mit einer Viskositätszahl von 134 ml/g.

#### Komponente (C)

Ein Olefinpolymerisat aus:
59,8 Gew.% Ethylen,
35 Gew.% n-Butylacrylat,
4,5 Gew.% Acrylsäure und
0,7 Gew.% Maleinsäureanhydrid,
hergestellt durch Copolymerisation der Monomeren bei erhöhter Temperatur und erhöhtem Druck (Schmelzindex MFI nach DIN 53 735: 11 g/10 min bei 190 °C und 2,16 kg Belastung).

#### Komponente C′) (zum Vergleich gemäß EP-A 34 704)

Ein Copolymerisat aus
92 Gew.% Ethylen und
8 Gew.% Acrylsäure
hergestellt durch Copolymerisation der Monomeren bei erhöhter Temperatur und erhöhtem Druck (Schmelzindex MFI nach DIN 53 735: 5 g/10 min bei 190 °C und 2,16 kg Belastung. Der Neutralisationsgrad betrug 16 % (Umsetzung mit Zinkacetat).

Komponente (D)

Wollastonit der mittleren Teilchengröße ($d_{50}$) von 10 $\mu$m.

Die Komponenten wurden auf einem Zweischneckenextruder bei 280 °C abgemischt und in ein Wasserbad extrudiert. Nach Granulierung und Trocknung wurden auf einer Spritzgußmaschine Prüfkörper gespritzt und geprüft.

Der Elastizitätsmodul wurde nach DIN 53 457 bestimmt, die Schädigungsarbeit am Testkästchen $w_{50}$ in Anlehnung an DIN 53 443 Teil 1 bestimmt; die Wärmeformbeständigkeit nach DIN 53 461 entsprechend ISO/R75, Methode B bei einer Belastung von 0,45 N/mm² pro grad Celsius.

Die Rekristallisationstemperatur $T_{KB}$ wurde nach ISO 3146 (Verfahren C) bei einer Abkühlrate von 20 °C/min mittels DSC 7 (Firma Perkin Elmer) bestimmt.

Der Schubmodul G1 wurde mittels des Torsionspendel- Versuches bei 20 °C und 210 °C nach DIN 53 445 bestimmt. Die Probendicke betrug 0,97 mm, das Tragkeitsmoment $310 \cdot 10^{-7}$ kg/m².

Die Zykluszeit wurde anhand der Methode am Testwerkzeug S 13 (Staubsaugerdeckel) bestimmt. Bei dieser Meßmethode wurde die Formmasse wie üblich in das Spritzgießwerkzeug eingespritzt.

Nach 5, 10, 15, 20 sec Kühlzeit wurde manuell der Entformungsschlag des erhaltenen Spritzgußteils überprüft, bis kein Entformungsschlag mehr meßbar war.

Die Zusammensetzung der Formmassen und die Ergebnisse der Messungen sind der Tabelle zu entnehmen.

Tabelle

| Nr. | Zusammensetzung [Gew.%] | | | | Schädigungsarbeit $W_{50}$ [Nm] | Elastizitätsmodul [N/mm2] | Wärmeformbeständigkeit [°C] | Zykluszeit [sec] |
|---|---|---|---|---|---|---|---|---|
| 1 | 54 (A) | 6 (B) | 10 (C) | 30 (D) | 49 | 4000 | 234 | 31 |
| 2 | 48 (A) | 12 (B) | 10 (C) | 30 (D) | 51 | 4000 | 230 | 35 |
| 3* | 60 (A') | - | 10 (C) | 30 (D) | 50 | 3900 | 210 | 52 |
| 4* | 60 (A) | - | 10 (C) | 30 (D) | 40 | 4000 | 232 | 33 |
| 5* | 70 (A) | - | 10 (C) | 20 (D) | 50 | 3700 | 230 | 33 |
| 6* | 70 (A) | - | 10 (C') | 20 (D) | 41 | 3700 | 230 | 34 |

*) zum Vergleich

Tabelle (Fortsetzung)

| Nr. | Zusammensetzung [Gew.%] | | | | Kristallisationsbeginn $T_{KB}$ [°C] | Schubmodul Gl [N/mm²] 20° | 210° |
|---|---|---|---|---|---|---|---|
| 1 | 54 (A) | 6 (B) | 10 (C) | 30 (D) | 233 | 1320 | 150 |
| 2 | 48 (A) | 12 (B) | 10 (C) | 30 (D) | 231 | 1310 | 140 |
| 3* | 60 (A') | - | 10 (C) | 30 (D) | 208 | 1280 | 100 |
| 4* | 60 (A) | - | 10 (C) | 30 (D) | 236 | 1620 | 150 |
| 5* | 70 (A) | - | 10 (C) | 20 (D) | 234 | 1310 | 140 |
| 6* | 70 (A) | - | 10 (C') | 20 (D) | 226 | 1310 | 135 |

*) zum Vergleich

## Ansprüche

1. Thermoplastische Formmassen aus

(A) 30 bis 96 Gew.% eines teilkristallinen Polyamids-6,6 oder eines teilkristallinen teilaromatischen Copolyamids aus

$\alpha_1$) 40 bis 90 Gew.% eines äquimolaren Gemisches aus Terephthalsäure und Hexamethylendiamin,

$\alpha_2$) 0 bis 50 Gew.% $\epsilon$-Caprolactam und

$\alpha_3$) 0 bis 60 Gew.% eines äquimolaren Gemisches aus Adipinsäure und Hexamethylendiamin,

$\alpha_4$) 0 bis 15 Gew.% weiteren polyamidbildenden Monomeren,

wobei der Anteil der Komponenten $\alpha_2$) und/oder $\alpha_3$) mindestens 10 Gew.% beträgt und die Copolyamide einen Triamingehalt von weniger als 0,5 Gew.% aufweisen,

(B) 2 bis 50 Gew.% eines von (A) verschiedenen teilkristallinen Polyamids,

(C) 2 bis 25 Gew.% eines nichtionomeren kautschukelastischen Polymerisats und

(D) 0 bis 50 Gew.% faser- oder teilchenförmiger Füllstoffe oder Mischungen dieser Füllstoffe.

2. Thermoplastische Formmassen nach Anspruch 1, enthaltend

(A) 40 bis 90 Gew.% eines teilkristallinen Polyamids (A),

(B) 5 bis 25 Gew.% eines Polyamids (B) und

(C) 5 bis 25 Gew.% eines nichtionomeren kautschukelastischen Polymerisats (C).

3. Thermoplastische Formmassen nach Anspruch 1, enthaltend

(A) 40 bis 85 Gew.% eines teilkristallinen Polyamids (A),

(B) 2 bis 20 Gew.% eines Polyamids (B) und

(C) 3 bis 20 Gew.% eines nichtionomeren kautschukelastischen Polymerisats (C) und

(D) 10 bis 50 Gew.% faser- oder teilchenförmige Füllstoffe oder Mischungen dieser Füllstoffe.

4. Thermoplastische Formmassen nach den Ansprüchen 1 bis 3, in denen das teilaromatische, teilkristalline Copolyamid (A) aus

$\alpha_1$) 50 bis 80 Gew.% Einheiten, die sich von Terephthalsäure und Hexamethylendiamin ableiten, und

$\alpha_2$) 20 bis 50 Gew.% Einheiten, die sich von $\epsilon$-Caprolactam ableiten,

aufgebaut ist.

5. Thermoplastische Formmassen nach den Ansprüchen 1 bis 4, enthaltend als Komponente (C) ein Copolymerisat aus

$\gamma_1$) 55 bis 79,5 Gew.% mindestens eines $\alpha$-Olefins mit 2 bis 8 C-Atomen,

$\gamma_2$) 20 bis 40 Gew.% eines primären oder sekundären $C_1$-$C_{12}$-Alkylesters der Acrylsäure oder Methacrylsäure oder Mischungen derartiger Ester

$\gamma_3$) 0,5 bis 20 Gew.% einer ethylenisch ungesättigten Mono- oder Dicarbonsäure und/oder einem funktionellen Derivat einer solchen Säure und

$\gamma_4$) 0 bis 20 Gew.% eines Epoxygruppen enthaltenden Monomeren.

6. Thermoplastische Formmassen nach Anspruch 5, enthaltend als Komponente (C) eine Mischung aus 100 bis 40 Gew.% eines schlagzäh modifizierenden Kautschuks aus den Monomeren $\gamma_1$-$\gamma_4$ gemäß Anspruch 5, welcher 0,5 bis 60 Gew.% aus Gruppen enthält, die sich von säurefunktionellen und/oder latent säurefunktionellen Monomeren ableiten und

0 bis 60 Gew.% eines schlagzäh modifizierenden thermoplastischen Kautschuks ($\gamma_5$), welcher frei von Gruppen ist, die sich von säurefunktionellen oder latent säurefunktionellen Monomeren ableiten.

7. Thermoplastische Formmassen nach den Ansprüchen 1 bis 6, enthaltend als Komponente (B) Polyamid-6, Polyamid-6,10, Polyamid-11, Polyamid-12, Copolyamide-66/6 oder Mischungen dieser Polyamide.

8. Verwendung der thermoplastischen Formmassen gemäß den Ansprüchen 1 bis 7 zur Herstellung von Fasern, Folien und Formkörpern.

9. Formkörper, erhältlich aus thermoplastischen Formmassen gemäß den Ansprüchen 1 bis 7.